Europäisches Patentamt

European Patent Office

Office européen des brevets

(19)

(11) Veröffentlichungsnummer: **0 170 100**
A2

# (12) EUROPÄISCHE PATENTANMELDUNG

(21) Anmeldenummer: 85108326.1

(22) Anmeldetag: 05.07.85

(51) Int. Cl.⁴: **F 23 J 15/00**
**B 01 D 53/34**

(30) Priorität: 31.07.84 DE 3428220

(43) Veröffentlichungstag der Anmeldung:
05.02.86 Patentblatt 86/6

(84) Benannte Vertragsstaaten:
AT BE CH DE FR GB IT LI NL

(71) Anmelder: Linde Aktiengesellschaft
Abraham-Lincoln-Strasse 21
D-6200 Wiesbaden(DE)

(72) Erfinder: Becker, Hans, Dr.-Ing.
Zwengauerweg 9
D-8000 München 71(DE)

(74) Vertreter: Schaefer, Gerhard, Dr.
Linde Aktiengesellschaft Zentrale Patentabteilung
D-8023 Höllriegelskreuth(DE)

(54) Verfahren zum Abkühlen oder Anwärmen eines Gases.

(57) Es wird ein Verfahren zum Abkühlen oder Anwärmen eines Gases vor dessen Behandlung in einem nachfolgenden Prozeß beschrieben. Um einerseits die Abkühlung auf niedrigere Temperaturen zu ermöglichen und andererseits die Anwärmung mit geringerem Aufwand durchzuführen, wird vorgeschlagen, daß das Gas vor dem Prozeß durch einen ersten Direktkontaktwärmetauscher mit einem flüssigen Wärmeträger abgekühlt oder angewärmt wird und daß das Gas nach dem Prozeß unter Nutzung der Enthalpieänderung des Wärmeträgers durch einen zweiten Direktkontaktwärmetauscher auf eine Temperatur in der Nähe der Ausgangstemperatur gebracht wird.

EP 0 170 100 A2

## Verfahren zum Abkühlen oder Anwärmen
### eines Gases

Die Erfindung betrifft ein Verfahren zum Abkühlen oder Anwärmen eines Gases vor dessen Behandlung in einem nachfolgenden Prozeß.

Bei vielen Prozessen in der chemischen Industrie z.B. Gasreinigungsverfahren oder katalytische Prozesse ist es nötig, das zu behandelnde Gas vor dem eigentlichen Prozeß einer Kühlung oder Anwärmung zu unterwerfen. Die Abkühlung erfolgt dabei häufig gegen Kühlwasser, da dieses am billigsten und nahezu immer vorhanden ist und gleichzeitig als Absorptionsmittel für Verunreinigungen eine Vorreinigung des Gases bewirkt. Die erreichbare Endtemperatur ist dabei allerdings durch die lokalen Kühlwasserbedingungen begrenzt. Zur Anwärmung des Gases wird oftmals Abwärme genutzt, die mittels eines Wärmeträgermediums aus dem Hauptprozeß oder einem anderen Verfahrensschritt gewonnen und an das Gas abgegeben wird. Hierzu ist jedoch meist ein großer apparativer und energieintensiver Aufwand erforderlich.

Der Erfindung liegt daher die Aufgabe zugrunde, ein Verfahren der eingangs genannte Art so zu verbessern, daß einerseits die Abkühlung auf niedrigere Temperaturen ermöglicht und andererseits die Anwärmung mit geringerem Aufwand durchgeführt werden kann.

Diese Aufgabe wird erfindungsgemäß dadurch gelöst, daß das Gas vor dem Prozeß durch einen ersten Direktkontaktwärmetauscher mit einem flüssigen Wärmeträger abgekühlt oder angewärmt wird und daß das Gas nach dem Prozeß unter Nutzung der Enthalpieänderung des Wärmeträgers durch einen zweiten Direktkontaktwärmetauscher auf eine Temperatur in der Nähe der Ausgangstemperatur gebracht wird.

Die Erfindung basiert auf der Überlegung, daß zumeist das in einem Hauptprozeß behandelte Gas nach diesem wieder auf die Ausgangstemperatur gebracht werden muß, um dann abgegeben oder weiterverarbeitet zu werden. So hat es sich nun als durchführbar und äußerst zweckmäßig erwiesen, die Vorkühlung bzw. Vorwärmung des Gases vor dem Prozeß mit dieser thermischen Nachbehandlung über Direktkontaktwärmetauscher miteinander zu koppeln. Dadurch kann auf wirtschaftliche Weise der Kälte- bzw. Wärmeinhalt des Gases an ein Wärmeträgermedium abgegeben und von diesem wiederum auf das behandelte Gas vor dessen Abgabe übertragen werden.

Zum Betreiben der Direktkontaktwärmetauscher werden erfindungsgemäß zwei Varianten vorgeschlagen. Die eine Möglichkeit besteht darin, daß der flüssige Wärmeträger selbst zwischen dem ersten und dem zweiten Direktkontaktwärmetauscher umgepumpt wird. Diese Verfahrensweise bietet sich insbesondere dann an, wenn die Anforderungen an die Produktreinheit, das heißt dann das behandelte Gas, dies zulassen. Die andere Variante ist dadurch gekennzeichnet, daß durch den ersten und durch den zweiten

- 3 -

0170100

Direktkontaktwärmetauscher jeweils ein eigener Wärmeträger im Kreislauf geführt wird und daß die beiden Wärmeträgerkreisläufe über einen indirekten Wärmetauscher miteinander gekoppelt sind. Die Kopplung der beiden Wärmeträgerkreisläufe durch einen indirekten Wärmetausch hat gegenüber direktem Wärmetausch den großen Vorteil, daß eventuell im ersten Wärmeträgermedium enthaltene Verunreinigungen nicht in den zweiten Kreislauf und damit in das abzugebende Gas gelangen können.

Mit großem Vorteil wird der direkte Wärmetausch im Gegenstrom in einer Kolonne durchgeführt. Als besonders günstig haben sich dabei Füllkörperkolonnen erwiesen. Durch geeignete Schüttungen oder Packungen wird der Wärme- bzw. Kälte- übergang bei geringem Druckverlust erheblich verbessert und damit die Abkühlung bzw. Anwärmung optimiert.

In besonders vorteilhafter Ausführung des erfindungsgemäßen Verfahrens wird als Wärmeträgermedium Wasser oder ein tiefsiedender Kohlenwasserstoff verwendet. Da oftmals das Gas mit Wasser beladen ist, kann dieses Wasser durch Abkühlen auskondensiert und als erster Kreislauf zirkuliert werden. Als Kohlenwasserstoffe kommen insbesondere Öle zur Anwendung, die einen niedrigen Dampfdruck aufweisen.

Das erfindungsgemäße Verfahren ist anwendbar bei allen Prozessen, die eine vorherige Abkühlung, wie z.B. bei physikalischen Wäschen, bzw. Anwärmung, wie z.B. bei chemischen Wäschen oder Prozessen, erforderlich machen. Als besonders günstig erweist sich das Verfahren jedoch bei physikalischen Wäschen, da bei diesen bekanntlich die Löslichkeit unter anderem eine Funktion der Temperatur der Wäsche ist. Im allgemeinen nimmt die Löslichkeit mit fallender Temperatur stark zu. Die notwendige Lösungsmittelmenge ist der Löslichkeit umgekehrt proportional. Da sowohl die Verbrauchszahlen als auch die Investitionskosten durch die Lösungsmittel stark beeinflußt werden, ist es meist günstig, die Wäsche bei möglichst tiefen Temperaturen zu betreiben. Bei Anwendung des erfindungsgemäßen Verfahrens auf derartige physikalische Wäschen kann somit eine deutliche Reduzierung der notwendigen Lösungsmittelmenge und dadurch bedingt eine nahezu proportionale Verkleinerung des gesamten Regenerierteiles sowie der Lösungsmittelerstfüllung erreicht werden.

Als ganz besonders günstig erweist sich dabei, die Anwendung des erfindungsgemäßen Verfahrens auf die Rauchgasentschwefelung, die meist bei Temperaturen zwischen 20 und 60°C durchgeführt wird. Auch hier bewirkt eine weitere Absenkung der Rauchgastemperatur und damit der Wäsche eine erhöhte Wirksamkeit der Wäsche. Da das gereinigte Rauchgas zur Abgabe über Kamin wieder angewärmt werden muß, kann mit dem erfindungsgemäßen Verfahren eine günstige Kopplung zwischen Abkühlung und Anwärmung erzielt werden.

Im folgenden wird das erfindungsgemäße Verfahren anhand eines schematisch dargestellten Ausführungsbeispiels näher beschrieben. Bei dem gezeigten Beispiel handelt es sich um eine physikalische Wäsche zur Entfernung von $SO_2$ aus Rauchgas. Es könnte jedoch auch jeder beliebige andere Prozeß zur Anwendung kommen.

Über Leitung 1 werden 259 900 m³/h eines vorgekühlten Rauchgases mit einer Temperatur von 53°C und einem Druck von 1 bar herangeführt. Das Rauchgas hat dabei folgende Zusammensetzung:

| | |
|---|---|
| $N_2$ | 78,33 Vol.% |
| $O_2$ | 4,98 Vol.% |
| $CO_2$ | 9,91 Vol.% |
| $SO_2$ | 0,11 Vol.% |
| $H_2O$ | 6,67 Vol.% |
| $H_2O$ Taupunkt ca. 40°C | |

Das Rauchgas wird in den unteren Teil einer Waschkolonne 2 eingeführt. In diesem unteren Teil wird das Gas in direktem Wärmetausch im Gegenstrom zu 540 t/h Wasser mit 29°C aus Leitung 3 auf 32°C und zu 235 t/h Wasser mit 8°C aus Leitung 4 auf 11°C gekühlt. Das kalte Gas wird sodann in einem nachfolgenden Hauptprozeßschritt im Gegenstrom zu kaltem (10°C) Lösungsmittel (230 t/h), das über Leitung 5 in den oberen Teil der Waschstufe eingespeist wird, gewaschen. Das Lösungsmittel nimmt dabei im Gegenstrom $SO_2$ auf und verläßt die Waschstufe über Leitung 6 und wird nach Anwärmung in einem Wärmetauscher 7 gegen regeneriertes Lösungsmittel zur Regenerierung geführt.

Das behandelte Gas, das mit einer Temperatur von 10°C vorliegt, wird in einer weiteren Behandlungsstufe mit zweitem Kreislaufwasser (246 t/h) aus Leitung 8, das eine Temperatur von 26°C hat, in direkten Wärmetausch gebracht, so daß es sich aufwärmt und über Leitung 9 mit Verdichter 10 in einer Menge von 250 360 m³/h abgegeben werden kann. Das gereinigte Rauchgas weist folgende Zusammensetzung auf:

| | |
|---|---|
| $N_2$ | 81,31 Vol.% |
| $O_2$ | 5,17 Vol.% |
| $CO_2$ | 10,29 Vol.% |
| $SO_2$ | 0,01 Vol.% |
| $H_2O$ | 3,22 Vol.% |

Aus dem unteren Teil der Kolonne 2 werden über Leitung 11 775 t/h Wasser mit 37°C abgezogen. Ein Teilstrom dieses Wassers wird über Leitung 12 als Rücklauf in die Säule zurückgeführt, um dort Verunreinigungen, wie z.B. Staub, HCN, HF auszuwaschen. Über Leitung 13 wird dieses Wasser zusammen mit Kondensat aus dem Rauchgas infolge Abkühlung als Abwasser (11,4 t/h) abgezogen.

Die Hauptmenge des Wassers wird jedoch im Kreislauf geführt und zwar über einen Wärmetauscher 14, in dem es zum einen mittels 26°C warmem Kühlwasser (1.240 t/h) auf 29°C abgekühlt wird und weiter gegen kaltes (12°C) zweites Kreislaufwasser auf 15°C abgekühlt wird. Das Kühlwasser erwärmt sich dabei auf 31°C, während das zweite Kreislaufwasser auf eine Temperatur von 26°C gebracht wird. Zur weiteren Abkühlung wird der zweite Teilstrom des ersten Kreislaufwassers in Leitung 4 durch einen Kühler 16 geführt und gegen Fremdkälte auf 8°C gekühlt.

Das zweite Kreislaufwasser wird aus dem oberen Teil der

Kolonne2 über Leitung 17 mit einer Temperatur von 12°C abgezogen und zum großen Teil über den Wärmetauscher 14 und Leitung 8 zurückgeführt, wobei es sich im Wärmetauscher auf 26°C anwärmt. Ein kleiner Teil des Wassers, nämlich 5 t/h, werden über Leitung 18 dem Lösungsmittel in Leitung 5 zugemischt. Da das gereinigte Gas bei der Anwärmung Wasser aufnimmt, muß immer eine gewisse Menge Frischwasser zugeführt werden. Dies erfolgt über Leitung 19, über die 11 t/h Frischwasser zugeleitet werden.

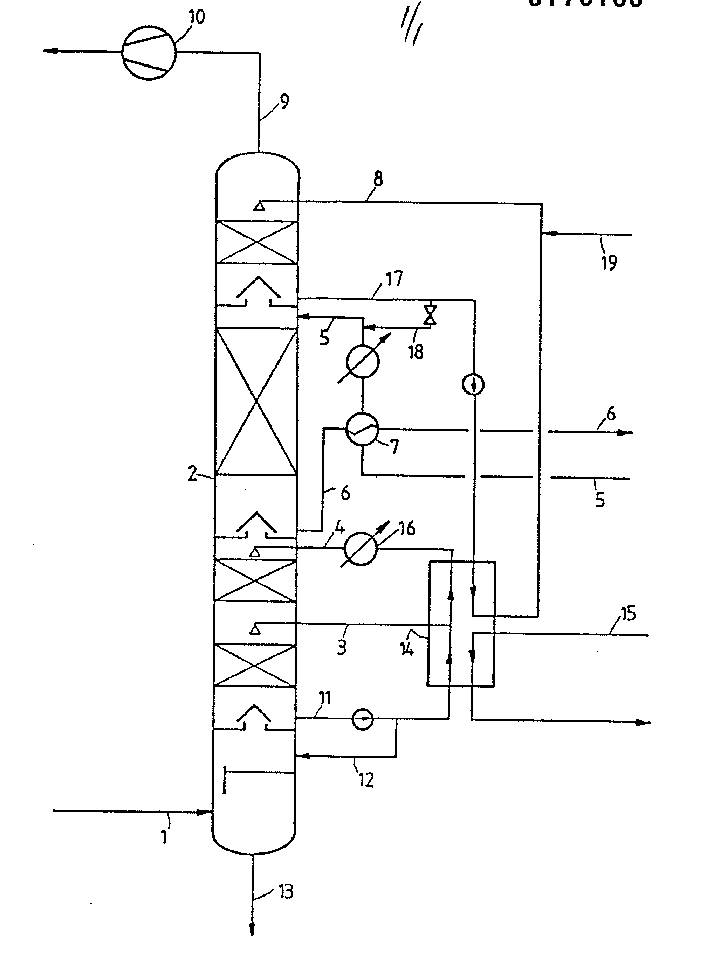

## Patentansprüche

1. Verfahren zum Abkühlen oder Anwärmen eines Gases vor dessen Behandlung in einem nachfolgenden Prozeß, dadurch gekennzeichnet, daß das Gas vor dem Prozeß durch einen ersten Direktkontaktwärmetauscher mit einem flüssigen Wärmeträger abgekühlt oder angewärmt wird und daß das Gas nach dem Prozeß unter Nutzung der Enthalpieänderung des Wärmeträgers durch einen zweiten Direktkontaktwärmetauscher auf eine Temperatur in der Nähe der Ausgangstemperatur gebracht wird.

2. Verfahren nach Anspruch 1, dadurch gekennzeichnet, daß der flüssige Wärmeträger selbst zwischen dem ersten und zweiten Direktkontaktwärmetauscher umgepumpt wird.

3. Verfahren nach Anspruch 1, dadurch gekennzeichnet, daß durch den ersten und durch den zweiten Direktkontaktwärmetauscher ein eigener Wärmeträger im Kreislauf geführt wird und daß die beiden Wärmeträgerkreisläufe über einen indirekten Wärmetauscher miteinander gekoppelt sind.

4. Verfahren nach einem der Ansprüche 1 bis 3, dadurch gekennzeichnet, daß der direkte Wärmetausch im Gegenstrom in einer Kolonne durchgeführt wird.

5. Verfahren nach einem der Ansprüche 1 bis 4, dadurch gekennzeichnet, daß als Wärmeträgermedium Wasser oder ein tiefsiedender Kohlenwasserstoff verwendet wird.

6. Verfahren nach einem der Ansprüche 1 bis 5, dadurch gekennzeichnet, daß als Gas Rauchgas eingesetzt wird.

**LINDE AKTIENGESELLSCHA**

ZENTRALE PATENTABTEILUNG

**D-8023 HÖLLRIEGELSKREUTH**

Linde AG, Zentrale Patentabteilung
Dr.-Carl-von-Linde-Straße 6-14, D-8023 Höllriegelskreuth

Einschreiben

Europäisches Patentamt
Erhardtstraße 27 .

8000 München 2

| | |
|---|---|
| Datum: | 30. Juli 1985 |
| Unser Zeichen: | H 84/79-EP |
| Bearbeiter: | Stiegler/fl |
| Telefon: | (089) 7273- 2393 |
| Ihr Schreiben vom: | |
| Ihr Zeichen: | |

EPO-OS
DG1

1 2 AUG. 1985

Betr.: Europäische Patentanmeldung Nr. 85108326.1

Es wird eine Berichtigung der obengenannten Patentanmeldung gemäß Regel (88) EPÜ beantragt. Hierzu
werden neue Seiten 3 und 2 (Patentansprüche) in dreifacher Ausfertigung eingereicht.

Auf Seite 3, Zeile 20 sowie in Anspruch 5 ist "tiefsiedende" in "hochsiedende" Kohlenwasserstoffe ausgebessert. Wie klar aus der Beschreibung, Seite 3,
Zeilen 23, 24 hervorgeht, kommen als Kohlenwasserstoffe
insbesondere Öle zur Anwendung, die einen niedrigen
Dampfdruck aufweisen. Es ist klar, daß einen niedrigen
Dampfdruck nicht die tiefsiedenden, sondern nur die
hochsiedenden Kohlenwasserstoffe besitzen.

Die Anmelderin bittet, das Versehen zu entschuldigen.

Dem Berichtigungsantrag gem. R. 88 EPÜ wird
/mit Ausnahme der gestrichene Punkte/
stattgegeben.
DEN HAAG, den      0 9 OCT. 1985
EINGANGSSTELLE                 R. KRAANEN
                               Ext.Nr.: 3040

LINDE AKTIENGESELLSCHAFT

(Dr.Schaefer)
Allgemeine Vollmacht 4378

Anlage

DR.-CARL-VON-LINDE-STRASSE 6-14  D-8023 HÖLLRIEGELSKREUTH
Fernruf (089) 7 27 31  Telex. 5 28 327-0 li d  Fax. 3/a (089) 72 73 29 46  Telegramm sauerstoff hoellriegelskreuth
Vorsitzender des Aufsichtsrats: Wolfgang Schieren  Vorstand: Hans Meinhardt, Vorsitzender; Gerhard Full, Reinhard Lohse, Joachim Müller, Georg Plötz
Sitz der Gesellschaft Wiesbaden  Registergericht HRB 2091